# EUROPÄISCHE PATENTANMELDUNG

(11) **EP 0 991 109 A1**
(43) Veröffentlichungstag der Anmeldung: **05.04.2000**
(21) Anmeldenummer: 99119422.6
(22) Anmeldetag: 30.09.1999
(51) Int. Cl.: H01J 61/44, H01J 61/72

(54) **Leuchtstofflampe**

(30) Priorität: 01.10.1998 DE 19845302
(71) Anmelder: UV-Power Licht GmbH, 49716 Meppen (DE); Lighttech Lamp Technology Ltd., 2120 Dunakeszi (HU)
(72) Erfinder: Tivadar, Szimon, 2120 Dunakeszi (HU)
(74) Vertreter: Patentanwälte Hauck, Graalfs, Wehnert, Döring, Siemons

(57) **Zusammenfassung**

Es wird eine Leuchtstofflampe mit einem Kolben, der mit einem Quecksilberdampf enthaltenden Medium gefüllt ist, mit in die Enden des Lampenkolbens eingeschmolzenen Elektroden und mit einer auf der Innenfläche des Lampenkolbens angeordneten Leuchtsstoffschicht beschrieben. Die Leuchtstoffschicht umfasst ein mit Blei aktiviertes Barium-Disilikat und ein mit Europium aktiviertes Barium-Magnesium-Aluminat-Leuchtstoffpulver. Die Leuchtstofflampe strahlt ein angenehmes blaues Licht ab, und weist einen besonders niedrigen Abfall des UV-Wertes im Vergleich zum Anfangswert auf.

## Beschreibung

Die vorliegende Erfindung betrifft eine Leuchtstofflampe mit einem Kolben, der mit einem Quecksilberdampf enthaltenden Medium gefüllt ist, mit in die Enden des Lampenkolbens eingeschmolzenen Elektroden und mit einer auf der Innenfläche des Lampenkolbens angeordneten Leuchtstoffschicht.

Derartige Leuchtstofflampen sind bekannt und beispielsweise in der DE 32 01 606 C2 beschrieben. Bei der bekannten Leuchtstofflampe handelt es sich bei dem Leuchtstoff beispielsweise um Kalziumhalophosphat. Die Leuchtstoffschicht ist hierbei mit einer Schicht aus Al₂O₃ vollkommen überdeckt, wobei das Gewicht der Schicht aus Al₂O₃ mehr als 160 µg/cm² beträgt.

Der Erfindung liegt die Aufgabe zugrunde, eine Leuchtstofflampe der eingangs wiedergegebenen Art zu schaffen, die blaues Licht erzeugt und einen besonders niedrigen Abfall des UV-Wertes im Vergleich zum Anfangswert besitzt.

Diese Aufgabe wird erfindungsgemäß dadurch gelöst, daß die Leuchtstoffschicht ein mit Blei aktiviertes Barium-Disilikat (Ba₂Si₂O₅) umfasst, das ein mit Europium aktiviertes Barium-Magnesium Aluminat (BaMg₂Al₁₀O₁₇)-Leuchtstoffpulver enthält.

Die erfindungsgemäß ausgebildete Leuchtstofflampe strahlt ein angenehmes blaues Licht aus. Die Strahlung erfolgt auf der 447 nm-Wellenlänge mit höchster Intensität. Die Kristallstruktur des Leuchtstoffpulvers entspricht β-Aluminat.

Die erfindungsgemäße Leuchtstofflampe hat den Vorteil, daß trotz des verwendeten Barium-Magnesium-Aluminat-Leuchtstoffpulvers, um blaues Licht zu erzeugen, die Wirksamkeit der Anfangs-UV-Strahlung dieser Lampe nicht niedriger ist als die von sonst identischen Lampenbauarten, hergestellt aber ohne Anwendung des beschriebenen Barium-Magnesium-Aluminat-Leuchtstoffpulverzuschlages. Ferner weisen die erfindungsgemäß ausgebildeten Leuchtstofflampen während ihrer Lebensdauer einen besonders niedrigen Abfall des UV-Wertes im Vergleich zum Anfangswert auf.

Die Leuchtstofflampe strahlt ein im sichtbaren Bereich sehr angenehmes blaues Licht aus, das den Aufenthalt unter derartigen Lampen besonders angenehm macht.

Besonders gute Ergebnisse in bezug auf die Lebensdauer werden bei einer Ausführungsform erreicht, bei der das mit Europium aktivierte Barium-Magnesium-Aluminat-Leuchtstoffpulver in einer Menge von 0,2-3 Gew% in dem mit Blei aktivierten Barium Disilikat vorliegt. Besonders bevorzugte Ergebnisse werden erhalten, wenn das Barium-Magnesium-Aluminat-Leuchtstoffpulver in einer Menge von 0,5 Gew% enthalten ist.

Die Leuchtstoffschicht ist vorzugsweise in einer Menge von 2500-3500 µg/cm² auf der Innenfläche des Kolbens vorhanden, wobei ein Wert von 3000 µg/cm² besonders bevorzugt wird.

In Weiterbildung der erfindungsgemäßen Leuchtstofflampe bedeckt das das mit Europium aktivierte BaMg₂Al₁₀O₁₇-Leuchtstoffpulver enthaltende mit Blei aktivierte Barium-Disilikat nur einen zusammenhängenden oder nicht zusammenhängenden Teil der Innenfläche des Lampenkolbens. Auf dem Rest der inneren Kolbenfläche solcher Lampen kann ein Leuchtstoffpulverüberzug ohne das mit Europium aktivierte BaMg₂Al₁₀O₁₇-Leuchtstoffpulver vorhanden sein.

Die erfindungsgemäße Leuchtstofflampe ist vorzugsweise als Niederdruck-Quecksilber-Dampf-Entladungslampe ausgebildet und wird besonders bevorzugt als Solarien-Leuchtstofflampe verwendet. Hier kommen die aufgezeigten Vorteile - hohe Wirksamkeit der Anfangs-UV-Strahlung, besonders niedriger Abfall des UV-Wertes bei Gebrauch - in besonderer Weise zur Geltung. Es folgt nunmehr ein Ausführungsbeispiel:

Es wurde eine Niederdruck-Quecksilberdampf-Entladungslampe mit in die Enden des Lampenkolbens eingeschmolzenen Elektroden hergestellt. Auf die Innenfläche des Lampenkolbens wurde ein Leuchtstoffüberzug bestehend aus mit Blei aktiviertem Barium-Disilikat (Ba₂Si₂O₅) aufgetragen, der ein mit Europium aktiviertes Barium-Magnesium-Aluminat (BaMg₂Al₁₀O₁₇)-Leuchtstoffpulver in einer Menge von 0,5 Gew% enthielt. Die erhaltene Leuchtstofflampe strahlte ein blaues Licht aus.

Die UV-A-Werte einer derartigen 100 W-Leuchtstofflampe in mW/cm² sowie einer das o.a. Leuchtstoffpulver nicht aufweisenden Vergleichslampe wurden nach 0,100 und 500 Stunden gemessen. Dabei ergaben sich folgende Werte:

| Zeit | Werte der erfindungsgemäßen Lampe | Werte der Vergleichslampe |
|---|---|---|
| 0 Stunden | 9,28 | 9,24 |
| 100 Stunden | 8,15 | 7,99 |
| 500 Stunden | 6,92 | 6,48 |

## Patentansprüche

1. Leuchtstofflampe mit einem Kolben, der mit einem Quecksilberdampf enthaltenden Medium gefüllt ist, mit in die Enden des Lampenkolbens eingeschmolzenen Elektroden und mit einer auf der Innenfläche des Lampenkolbens angeordneten Leuchtstoffschicht, dadurch gekennzeichnet, daß die Leuchtstoffschicht ein mit Blei aktiviertes Barium-Disilikat (Ba₂Si₂O₅) umfasst, das ein mit Europium aktiviertes Barium-Magnesium-Aluminat (BaMg₂Al₁₀O₁₇)-Leuchtstoffpulver enthält.

2. Leuchtstofflampe nach Anspruch 1, dadurch gekennzeichnet, daß das mit Europium aktivierte Barium-Magnesium-Aluminat-Leuchtstoffpulver in einer Menge von 0,2-3 Gew% im mit Blei aktivierten Barium-Disilikat vorliegt.

3. Leuchtstofflampe nach Anspruch 1 oder 2, dadurch gekennzeichnet, daß das Barium-Magnesium-Aluminat-Leuchtstoffpulver in einer Menge von 0,5 Gew% im mit Blei aktivierten Barium-Disilikat vorhanden ist.

4. Leuchtstofflampe nach einem der vorangehenden Ansprüche, dadurch gekennzeichnet, daß die Leuchtstoffschicht in einer Menge von 2500-3500 µg/cm² auf der Innenfläche des Kolbens vorhanden ist.

5. Leuchtstofflampe nach einem der vorangehenden Ansprüche, dadurch gekennzeichnet, daß das das mit Europium aktivierte Barium-Magnesium-Aluminat-Leuchtpulver enthaltende mit Blei aktivierte Barium-Disilikat nur einen zusammenhängenden oder nicht zusammenhängenden Teil der Innenfläche des Lampenkolbens bedeckt.

6. Leuchtstofflampe nach einem der vorangehenden Ansprüche, dadurch gekennzeichnet, daß sie als Niederdruck-Quecksilberdampf-Entladungslampe ausgebildet ist.

7. Leuchtstofflampe nach einem der vorangehenden Ansprüche, dadurch gekennzeichnet, daß sie als Solarien-Leuchtstofflampe ausgebildet ist.
